# EUROPÄISCHE PATENTSCHRIFT

(11) **EP 2 366 190 B1**
(45) Veröffentlichungstag und Bekanntmachung des Hinweises auf die Patenterteilung: **10.07.2013**
(21) Anmeldenummer: 09804261.7
(22) Anmeldetag: 10.12.2009
(51) Int. Cl.: H01G 4/005, H01G 4/30, H01G 4/38

(54) **ELEKTRISCHES VIELSCHICHTBAUELEMENT UND SCHALTUNGSANORDNUNG DAMIT**
ELECTRICAL MULTI-LAYERED COMPONENT AND CIRCUIT ARRANGEMENT COMPRISING THE SAME
COMPOSANT ÉLECTRIQUE MULTICOUCHE ET CONFIGURATION DE CIRCUIT POURVU DUDIT COMPOSANT

(30) Priorität: 12.12.2008 DE 102008062023
(43) Veröffentlichungstag der Anmeldung: 21.09.2011
(73) Patentinhaber: Epcos AG, 81669 München (DE)
(72) Erfinder: FEICHTINGER, Thomas, A-8010 Graz (AT); KRENN, Georg, A-8020 Graz (AT)
(74) Vertreter: Epping - Hermann - Fischer
(86) Internationale Anmeldenummer: PCT/EP2009/066855
(87) Internationale Veröffentlichungsnummer: WO 2010/066848

(56) Entgegenhaltungen:
- US-A1- 2003 129 957

## Beschreibung

Aus den Druckschriften DE 10 2007 020 783 A1, US 2003/0129957 und US 2006/0221545 sind elektrische Vielschichtbauelemente bekannt.

Eine zu lösende Aufgabe ist es, ein auf einfache Art und Weise herstellbares elektrisches Vielschichtbauelement anzugeben, das eine hohe Integrationsdichte aufweist. Weiterhin soll eine Schaltungsanordnung mit dem elektrischen Vielschichtbauelement angegeben werden.

Die Aufgabe wird durch ein elektrisches Vielschichtbauelement nach Anspruch 1 beziehungsweise durch eine Schaltungsanordnung nach Anspruch 12 gelöst. Vorteilhafte Ausgestaltungen des elektrischen Vielschichtbauelements sind Gegenstand von Unteransprüchen.

Es wird ein elektrisches Vielschichtbauelement mit einem monolithischen Grundkörper angegeben, das mehrere alternierend übereinander angeordnete Keramikschichten und Elektrodenschichten umfasst. Der Grundkörper weist zwei einander gegenüberliegende Stirnflächen und zwei gegenüberliegende Seitenflächen auf. Das Vielschichtbauelement weist eine Mehrzahl an Außenelektroden auf. Eine Mehrzahl von Innenelektroden ist in den Elektrodenschichten ausgebildet, wobei die Innenelektroden wenigstens teilweise überlappen und Überlappungsbereiche bilden. Jeder Innenelektrode ist jeweils eine Außenelektrode zugeordnet. Wenigstens eine von einer Stirnfläche ausgehende erste Innenelektrode überlappt mit wenigstens einer von einer gegenüberliegenden Stirnfläche ausgehenden zweiten Innenelektrode. Von einer Seitenfläche geht wenigstens eine dritte Innenelektrode aus, die mit der ersten und zweiten Innenelektrode überlappt.

Die erste und die zweite Innenelektrode des elektrischen Vielschichtbauelements begrenzen im Überlappungsbereich eine erste elektrische Funktionseinheit.

Eine dritte Innenelektrode überlappt mit der ersten und zweiten Innenelektrode und bildet im Überlappungsbereich zusammen mit einer Keramikschicht eine zweite elektrische Funktionseinheit.

In einer Ausführungsform weist das elektrische Vielschichtbauelement eine vierte Innenelektrode auf, die von einer Seitenfläche ausgeht. Die vierte Innenelektrode überlappt wenigstens teilweise mit wenigstens einer der ersten und der zweiten Innenelektrode und bildet zusammen mit einer Keramikschicht eine dritte elektrische Funktionseinheit.

Die Funktionseinheiten des elektrischen Vielschichtbauelements sind vorzugsweise voneinander größtenteils unabhängig.

In einer Ausführungsform sind die dritte und die vierte Innenelektrode in der gleichen Elektrodenschicht angeordnet.

Die dritte und die vierte Innenelektrode sind vorzugsweise so angeordnet, dass sie untereinander keine Randeffekte aufweisen.

In einer Ausführungsform sind die dritte und die vierte Innenelektrode in der gleichen Elektrodenschicht angeordnet und soweit voneinander beabstandet, dass zwischen der dritten und vierten Elektrode keine erwünschten Randeffekte auftreten, so dass zumindest näherungsweise keine elektrische Funktionseinheit gebildet ist.

In einer Ausführungsform sind die erste und die zweite Innenelektrode jeweils mit einer Außenelektrode verbunden, die auf gegenüberliegenden Stirnflächen des Grundkörpers angeordnet sind.

In einer weiteren Ausführungsform sind die dritte und die vierte Innenelektrode jeweils mit einer Außenelektrode verbunden, die auf gegenüberliegenden Seitenflächen des Grundkörpers angeordnet sind. In einer Ausführungsform, bei der das elektrische Vielschichtbauelement eine erste, eine zweite und eine dritte Innenelektrode umfasst, kann das elektrische Vielschichtbauelement auf beiden Seitenflächen des Grundkörpers eine Außenelektrode aufweisen, wobei jedoch eine der Außenelektroden an den Seitenflächen keine direkte elektrische Verbindung zu einer der Innenelektroden aufweist. Aus Symmetriegründen beziehungsweise zur einfachen Herstellung kann es vorteilhaft sein, wenn das elektrische Vielschichtbauelement auf den gegenüberliegenden Seitenflächen jeweils eine Außenelektrode aufweist.

In einer Ausführungsform weist das elektrische Vielschichtbauelement bei n Außenelektroden, wobei n eine ganze Zahl größer als 2 ist, genau n-1 elektrische Funktionseinheiten auf.

In einer weiteren Ausführungsform weist das elektrische Vielschichtbauelement vorzugsweise eine symmetrische Anordnung von Innenelektroden entlang einer Längsachse des Grundkörpers auf. Die beiden symmetrischen Teilbereiche des Vielschichtbauelements weisen jeweils bei n Außenelektroden genau n-1 elektrische Funktionseinheiten auf. Die beiden Teilbereiche des elektrischen Vielschichtbauelements weisen somit zusammen bei n Außenelektroden, wobei n eine ganze Zahl größer als 2 ist, genau n-2 elektrische Funktionseinheiten auf.

In einer Ausführungsform weist eine elektrische Funktionseinheit des Vielschichtbauelements die Funktion eines Kondensators oder eines Varistors auf. In einer weiteren Ausführungsform ist es auch möglich, dass sowohl ein Kondensator als auch ein Varistor, oder mehrere Varistoren oder Kondensatoren in einem elektrischen Vielschichtbauelement angeordnet sind.

In einer Ausführungsform weist das elektrische Vielschichtbauelement mehrere Kondensatoren mit unterschiedlichen Kapazitäten auf.

In einer weiteren Ausführungsform weist das Vielschichtbauelement mehrere Varistoren mit unterschiedlichen Varistorspannungen auf. Es ist jedoch auch möglich, dass das elektrische Vielschichtbauelement mehrere Kondensatoren und Varistoren mit jeweils unterschiedlichen Kapazitäten beziehungsweise unterschiedlichen Varistorspannungen aufweist.

In einer Ausführungsform des zuvor beschriebenen Vielschichtbauelements umfasst die Keramikschicht eine Varistorkeramik beziehungsweise eine Kondensatorkeramik.

Die Varistorkeramik des elektrischen Vielschichtbauelements, die die Keramikschichten bildet, weist vorzugsweise Zinkoxidwismutantimon (ZnO-BiSb) oder Zinkoxidpraseodym (ZnPr) auf.

In einer Ausführungsform weist das elektrische Vielschichtbauelement eine symmetrische Anordnung auf, wobei jede der Teilanordnungen den Aufbau eines zuvor beschriebenen Vielschichtbauelements umfasst, wobei die Außenelektroden vorzugsweise zu den beiden Stirnflächen und zu einer der Seitenflächen ausgeführt sind. Hierbei umfasst die Teilanordnung des symmetrischen Vielschichtbauelements erste und zweite Innenelektroden, die mit den stirnseitig angeordneten Außenelektroden kontaktierend sind, sowie eine oder mehrere dritte beziehungsweise vierte Innenelektroden, die mit den ersten und zweiten Innenelektroden überlappen und mit Außenelektroden an einer der Seitenflächen elektrisch verbunden sind.

Zur Beschaltung eines zuvor beschriebenen Vielschichtbauelements in einer Schaltungsanordnung ist wenigstens eine der stirnseitig angeordneten Außenelektroden mit Masse verbunden. Wenigstens eine der stirnseitig angeordneten Außenelektroden ist mit einer spannungsführenden Leitung verbunden. Die weiteren, an den Seitenflächen des elektrischen Vielschichtbauelements angeordneten Außenelektroden sind vorzugsweise mit Signalleitungen verbunden.

Die oben beschriebenen Gegenstände und die Anordnung werden anhand der folgenden Figuren und Ausführungsbeispiele näher erläutert.

Die nachfolgend beschriebenen Zeichnungen sind nicht als maßstabsgetreu aufzufassen, vielmehr können die Darstellungen in einzelnen Dimensionen vergrößert, verkleinert oder auch verzerrt dargestellt sein. Elemente, die einander gleichen oder die die gleiche Funktion übernehmen, sind mit den gleichen Bezugszeichen bezeichnet.
- Figur 1a: zeigt einen schematischen Aufbau der Innenelektroden eines ersten Ausführungsbeispiels eines elektrischen Vielschichtbauelements mit drei Innenelektroden,
- Figur 1b: zeigt einen Querschnitt durch das elektrische Vielschichtbauelement gemäß Figur 1a,
- Figur 2: zeigt die Anordnung von Außenelektroden einer Ausführungsform eines elektrischen Vielschichtbauelements,
- Figur 3a: zeigt schematisch den Aufbau der Innenelektroden eines weiteren Ausführungsbeispiels des elektrischen Vielschichtbauelements mit vier Innenelektroden,
- Figur 3b: zeigt einen Querschnitt durch ein elektrisches Vielschichtbauelement mit einer Innenelektrodenanordnung gemäß Figur 3a,
- Figur 4a: zeigt schematisch den Aufbau der Innenelektroden eines anderen Ausführungsbeispiels des Vielschichtbauelements mit vier Innenelektroden,
- Figur 4b: zeigt einen Querschnitt durch ein elektrisches Vielschichtbauelement mit einer Innenelektrodenanordnung gemäß Figur 4a,
- Figur 5a: zeigt schematisch den Aufbau der Innenelektroden eines dritten Ausführungsbeispiels des elektrischen Vielschichtbauelements mit vier Innenelektroden,
- Figur 5b: zeigt einen Querschnitt durch ein elektrisches Vielschichtbauelement mit einer Innenelektrodenanordnung gemäß Figur 5a,
- Figur 5c: zeigt die Anordnung der Außenelektroden gemäß einem Ausführungsbeispiel des elektrischen Vielschichtbauelements nach den Figuren 5a und 5b,
- Figur 6a: zeigt schematisch den Aufbau der Innenelektroden eines Ausführungsbeispiels des elektrischen Vielschichtbauelements mit sechs Innenelektroden,
- Figur 6b: zeigt einen Querschnitt durch ein Vielschichtbauelement mit einer Innenelektrodenanordnung gemäß Figur 6a,
- Figur 7a: zeigt schematisch den Aufbau der Innenelektroden eines Ausführungsbeispiels des elektrischen Vielschichtbauelements mit acht Innenelektroden,
- Figur 7b: zeigt einen Querschnitt durch ein elektrisches Vielschichtbauelement mit einer Innenelektrodenanordnung gemäß Figur 7a,
- Figur 8a: zeigt schematisch den Aufbau der Innenelektroden eines anderen Ausführungsbeispiels des elektrischen Vielschichtbauelements mit acht Innenelektroden,
- Figur 8b: zeigt einen Querschnitt durch ein elektrisches Vielschichtbauelement mit einer Innenelektrodenanordnung gemäß Figur 8a,
- Figur 9a: zeigt schematisch den Aufbau der Innenelektroden eines weiteren Ausführungsbeispiels des elektrischen Vielschichtbauelements mit zwei symmetrischen Untereinheiten,
- Figur 9b: zeigt einen Querschnitt durch ein elektrisches Vielschichtbauelement mit einer Innenelektrodenanordnung gemäß Figur 9a,
- Figur 9c: zeigt die Anordnung der Außenelektroden gemäß dem Ausführungsbeispiel eines elektrischen Vielschichtbauelements nach den Figuren 9a und 9b,
- Figur 10: zeigt eine Schaltungsanordnung eines Ausführungsbeispiels des elektrischen Vielschichtbauelements mit mehreren elektrischen Funktionseinheiten.

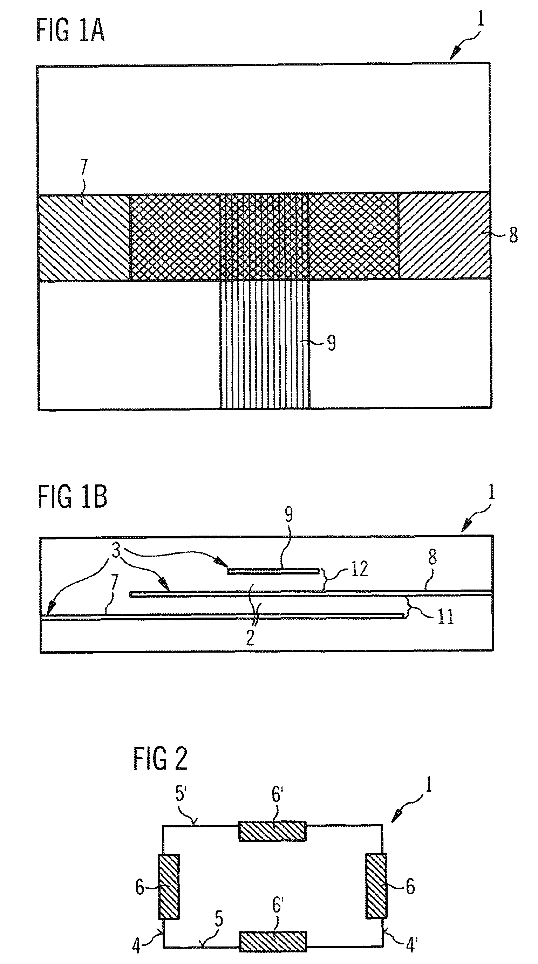

Figur 1a zeigt einen schematischen Aufbau der Innenelektrodenanordnung eines elektrischen Vielschichtbauelements. Das Vielschichtbauelement weist einen Grundkörper 1 auf, wobei eine erste Innenelektrode 7 und eine zweite Innenelektrode 8 derart angeordnet sind, dass sie in der Draufsicht miteinander überlappen. Das elektrische Vielschichtbauelement weist eine dritte Innenelektrode 9 auf, die mit der ersten 7 und zweiten 8 Innenelektrode des Vielschichtbauelements einen Überlappungsbereich aufweist.

In Figur 1b ist ein Querschnitt durch ein Vielschichtbauelement gemäß der Anordnung der Innenelektroden 7, 8, 9 nach Figur 1a dargestellt. Das elektrische Vielschichtbauelement weist einen Grundkörper 1 auf. Das Vielschichtbauelement weist mehrere Keramikschichten 2 und mehrere Elektrodenschichten 3 auf. Eine erste 7 und eine zweite 8 Innenelektrode sind übereinander in unterschiedlichen Elektrodenschichten angeordnet. Die erste 7 und die zweite 8 Innenelektrode bilden im Überlappungsbereich mit einer dazwischen liegenden Keramikschicht eine erste elektrische Funktionseinheit 11. Eine dritte Innenelektrode 9 überlappt mit der ersten 7 und zweiten 8 Innenelektrode und bildet mit der Keramikschicht eine zweite Funktionseinheit 12. Die Elektrodenschichten 3 sind durch die Innenelektroden 7, 8 und 9 ausgebildet.

Figur 2 zeigt schematisch die Anordnung von Außenelektroden 6, 6' an einem Grundkörper 1 eines elektrischen Vielschichtbauelements. Das elektrische Vielschichtbauelement zeigt eine Ausführungsform mit vier Außenelektroden 6, 6', wobei zwei Außenelektroden 6 an den Stirnseiten 4, 4' des Grundkörpers 1 angeordnet sind. An zwei gegenüberliegenden Seitenflächen 5, 5' des Grundkörpers 1 ist jeweils eine weitere Außenelektrode 6' angeordnet.

Gemäß den Ausführungsformen der Figuren 1a und 1b des elektrischen Vielschichtbauelements kann die Anordnung der Außenelektroden 6, 6' wie in Figur 2 erfolgen, hierbei ist jedoch eine der Außenelektroden 6' unbeschaltet beziehungsweise nicht mit einer der Innenelektroden 7, 8 und 9 des elektrischen Vielschichtbauelements verbunden. Die erste 7 und zweite 8 Innenelektrode des elektrischen Vielschichtbauelements sind vorzugsweise mit den stirnseitig angeordneten Außenelektroden 6 elektrisch verbunden. Die dritte Innenelektrode 9 ist vorzugsweise mit einer Außenelektrode 6' verbunden, die an den Seitenflächen des Grundkörpers 1 angeordnet ist.

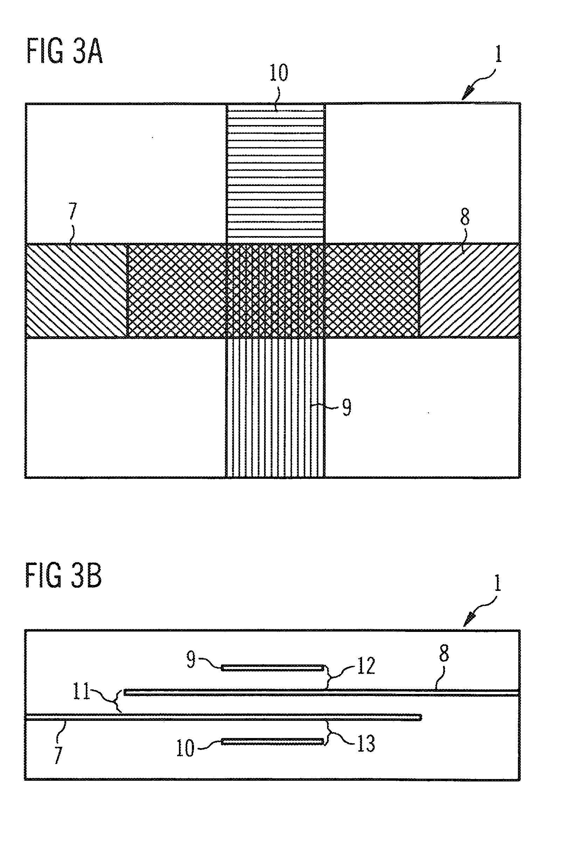

Figur 3a zeigt einen schematischen Aufbau der Innenelektroden einer weiteren Ausführungsform des elektrischen Vielschichtbauelements. Das elektrische Vielschichtbauelement weist einen Grundkörper 1 auf. Eine erste 7 und zweite 8 Innenelektrode überlappen einander teilweise und bilden im Überlappungsbereich eine erste elektrische Funktionseinheit 11, die in Figur 3b dargestellt ist. Das elektrische Vielschichtbauelement weist eine dritte Innenelektrode 9 und eine vierte Innenelektrode 10 auf, die jeweils mit der ersten 7 und zweiten 8 Innenelektrode einen Überlappungsbereich aufweisen und eine zweite 12 und dritte 13 elektrische Funktionseinheiten bilden, die in Figur 3b dargestellt sind.

In Figur 3b ist schematisch ein Querschnitt eines elektrischen Vielschichtbauelements gemäß der Ausführungsform nach Figur 3a dargestellt. Das Vielschichtbauelement weist einen Grundkörper 1 mit einer ersten 7 und einer zweiten 8 Innenelektrode auf, die einander überlappen und eine erste elektrische Funktionseinheit 11 bilden. Eine dritte 9 und eine vierte 10 Innenelektrode überlappen mit der ersten 7 und zweiten 8 Innenelektrode und bilden eine zweite 12 und dritte 13 elektrische Funktionseinheit. Das elektrische Vielschichtbauelement gemäß den Ausführungsformen 3a und 3b weist vorzugsweise eine Anordnung der Außenelektroden gemäß der Ausführungsform nach Figur 2 auf. Hierbei sind alle Außenelektroden 6, 6' direkt mit Innenelektroden verbunden, wobei die erste 7 und zweite 8 Innenelektrode mit den stirnseitig angeordneten Außenelektroden 6 kontaktiert sind und die dritte 9 beziehungsweise vierte 10 Innenelektrode mit den Außenelektroden 6' an den Seitenflächen des Grundkörpers 1 verbunden sind.

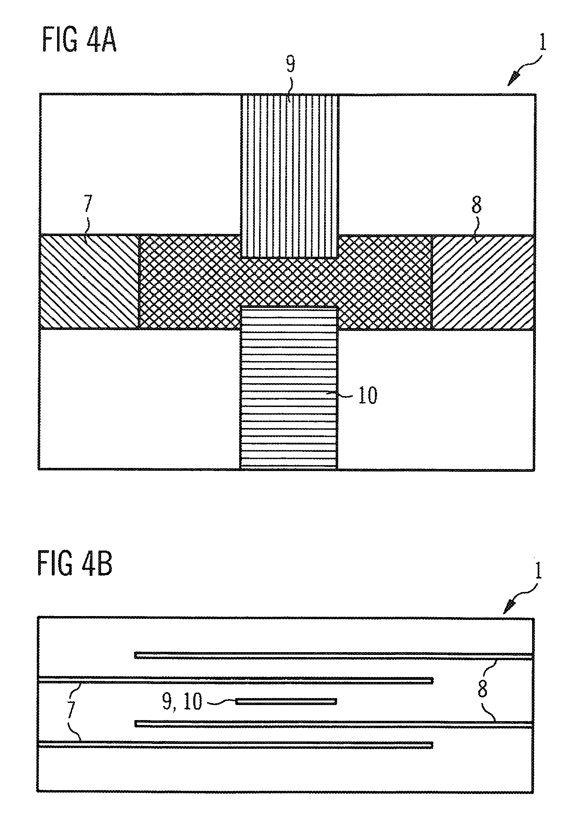

Figur 4a zeigt eine weitere Ausführungsform des elektrischen Vielschichtbauelements, wobei der Grundkörper 1 erste 7 und zweite 8 Innenelektroden aufweist. Die erste Innenelektrode 7 und die zweite Innenelektrode 8 überlappen einander und begrenzen eine erste elektrische Funktionseinheit 11. Die Ausführungsform des elektrischen Vielschichtbauelements gemäß Figur 4a weist eine dritte 9 und vierte 10 Innenelektrode auf, die in der gleichen Elektrodenschicht angeordnet sind. Die dritte 9 und vierte 10 Innenelektrode überlappen und mit den ersten 7 beziehungsweise zweiten 8 Innenelektrode und begrenzen weitere elektrische Funktionseinheiten. Die dritte 9 und vierte 10 Innenelektrode sind vorzugsweise derart angeordnet, dass sie mit den ersten 7 und zweiten 8 Innenelektroden elektrische Funktionseinheiten begrenzen, jedoch untereinander vorzugsweise keine elektrische Funktionseinheit bilden.

Figur 4b zeigt einen Querschnitt durch ein elektrisches Vielschichtbauelement gemäß der Innenelektrodenanordnung nach Figur 4a. Das elektrische Vielschichtbauelement weist einen Grundkörper 1 auf, der zwei erste Innenelektroden 7 und zwei zweite Innenelektroden 8 aufweist. Die ersten 7 und zweiten 8 Innenelektroden bilden jeweils Paare. Zwischen diesen beiden Paaren der ersten 7 und zweiten 8 Innenelektroden sind eine dritte 9 und eine vierte 10 Innenelektrode angeordnet. Die dritte 9 und die vierte 10 Innenelektrode sind in der gleichen Elektrodenschicht angeordnet. Die Ausführungsform des elektrischen Vielschichtbauelements gemäß den Figuren 4a und 4b weist beispielsweise eine Anordnung der Außenelektroden gemäß der Figur 2 auf. Hierbei sind die ersten 7 und zweiten 8 Innenelektroden mit den stirnseitig angeordneten Außenelektroden 6 kontaktiert. Die dritte 9 und die vierte 10 Innenelektrode sind mit den Außenelektroden 6' verbunden, die an den Seitenflächen des Grundkörpers 1 des elektrischen Vielschichtbauelements angeordnet sind.

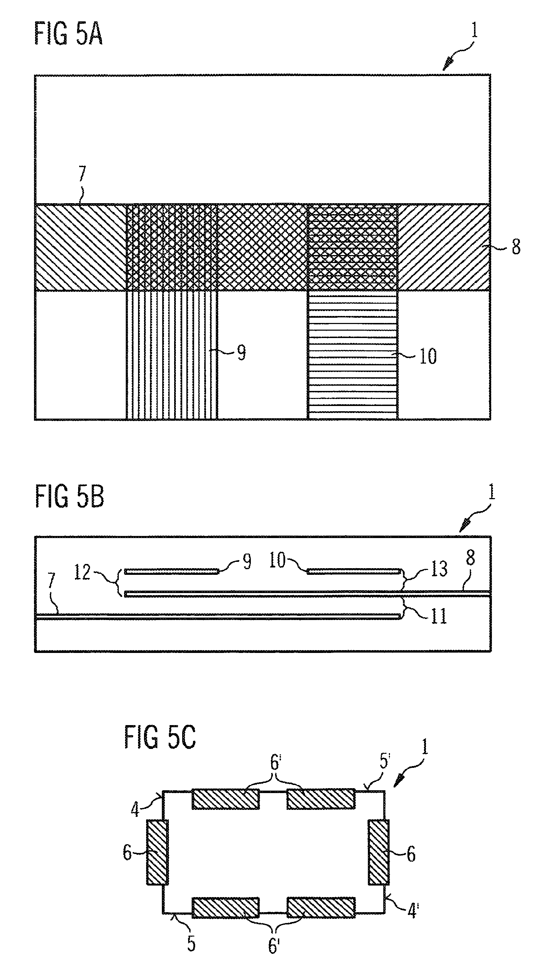

Figur 5a zeigt eine weitere Ausführungsform des elektrischen Vielschichtbauelements, wobei das elektrische Vielschichtbauelement einen Grundkörper 1 aufweist, bei dem eine erste 7 und zweite 8 Innenelektrode derart angeordnet sind, dass sie einander überlappen und eine erste elektrische Funktionseinheit 11 bilden. Der Grundkörper 1 des elektrischen Vielschichtbauelements gemäß der Ausführungsform nach Figur 5a weist eine dritte 9 und eine vierte 10 Innenelektrode auf, die mit den ersten 7 und zweiten 8 Innenelektrode überlappen und weitere elektrische Funktionseinheiten bilden. Die dritte 9 und vierte 10 Innenelektrode des elektrischen Vielschichtbauelements sind in der dargestellten Ausführungsform zu derselben Seitenfläche des Grundkörpers 1 geführt.

In Figur 5b ist ein Querschnitt des elektrischen Vielschichtbauelements gemäß der Ausführungsform in 5a dargestellt. Das elektrische Vielschichtbauelement weist einen Grundkörper 1 auf, bei dem mehrere Innenelektroden 7, 8, 9, 10 derart angeordnet sind, dass eine erste 7 und zweite 8 Innenelektrode miteinander überlappen und eine erste elektrische Funktionseinheit 11 begrenzen. Eine dritte Innenelektrode 9 ist derart angeordnet, dass sie mit der ersten 7 und zweiten 8 Innenelektrode überlappt und eine zweite elektrische Funktionseinheit 12 begrenzt. Die vierte Innenelektrode des elektrischen Vielschichtbauelements ist ebenfalls derart angeordnet, dass sie mit der ersten 7 und zweiten 8 Innenelektrode überlappt und eine dritte elektrische Funktionseinheit 13 bildet. Die dritte 9 und die vierte 10 Innenelektrode sind nebeneinander in der gleichen Elektrodenschicht angeordnet.

In Figur 5c ist die Anordnung der Außenelektroden 6, 6' an einem Grundkörper 1 eines elektrischen Vielschichtbauelements gezeigt. Das elektrische Vielschichtbauelement weist an den Stirnseiten 4, 4' des Grundkörpers 1 jeweils eine Außenelektrode 6 auf, die jeweils mit der ersten 7 beziehungsweise der zweiten 8 Innenelektrode des elektrischen Vielschichtbauelements verbunden ist. Die an den Seitenflächen 5, 5' des Grundkörpers 1 angeordneten Außenelektroden 6' sind vorzugsweise mit der dritten 9 beziehungsweise vierten 10 Innenelektrode des elektrischen Vielschichtbauelements verbunden.

Die Ausführungsformen des elektrischen Vielschichtbauelements nach Figur 5c zeigt an den Seitenflächen jeweils zwei Außenelektroden 6'. Die Anordnung der Außenelektroden 6, 6' für ein elektrisches Vielschichtbauelement gemäß der Ausführungsform nach den Figuren 5a und 5b kann gemäß der in Figur 5c dargestellten Ausführungsform ausgeführt sein. Es ist für das, in der Figur 5a gezeigte Ausführungsbeispiel des elektrischen Vielschichtbauelements jedoch nicht notwendig, dass die Außenelektroden 6' auf gegenüberliegenden Seitenflächen des Grundkörpers 1 angeordnet sind. Für die Ausführungsform gemäß der Figuren 5a und 5b reichen zwei Außenelektroden 6' an einer Seitenfläche des Grundkörpers 1. Die weiteren Außenelektroden 6' an der gegenüberliegenden Seitenfläche sind unbeschaltet und mit keiner der Innenelektroden verbunden. Aus Symmetriegründen beziehungsweise für die Herstellung des elektrischen Vielschichtbauelements kann es jedoch von Vorteil sein, wenn der Grundkörper 1, wie in Figur 5c dargestellt, symmetrisch angeordnete Außenelektroden 6, 6' aufweist.

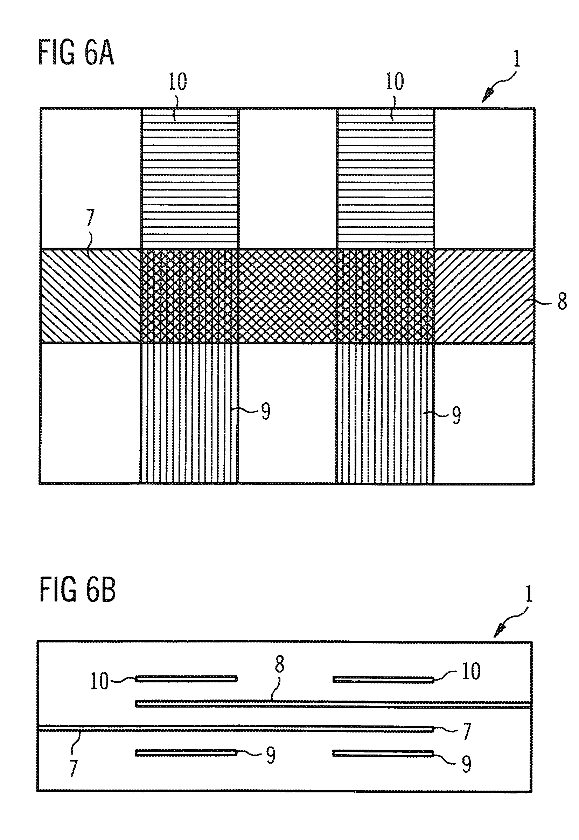

Figur 6a zeigt eine weitere Ausführungsform eines elektrischen Vielschichtbauelements, wobei das elektrische Vielschichtbauelement einen Grundkörper 1, in dem eine erste 7 und eine zweite 8 Innenelektrode angeordnet sind, die einander überlappen. Die Ausführungsform gemäß Figur 6a zeigt zwei dritte Innenelektroden 9, die mit der ersten 7 und der zweiten 8 Innenelektrode überlappen und elektrische Funktionseinheiten begrenzen. Das elektrische Vielschichtbauelement weist zwei vierte Innenelektroden 10 auf, die ebenfalls mit den ersten und zweiten Innenelektroden 7, 8 überlappen und weitere elektrische Funktionseinheiten begrenzen.

In Figur 6b ist ein Querschnitt durch ein Vielschichtbauelement gemäß der Innenelektrodenanordnung des elektrischen Vielschichtbauelements nach Figur 6a dargestellt. Das elektrische Vielschichtbauelement weist einen Grundkörper 1 auf, bei dem eine erste 7 und zweite 8 Innenelektrode einander überlappen und eine erste elektrische Funktionseinheit 11 begrenzen. Zwei dritte Innenelektroden 9 des elektrischen Vielschichtbauelements überlappen mit der ersten 7 und zweiten 8 Innenelektrode und bilden im Verbund mit der Keramik weitere elektrische Funktionseinheiten. Zwei vierte Innenelektroden 10 überlappen ebenfalls mit der ersten 7 und der zweiten 8 Innenelektrode und bilden weitere elektrische Funktionseinheiten. Die dritten 9 und die vierten 10 Innenelektroden sind jeweils in unterschiedlichen Elektrodenschichten, ober- beziehungsweise unterhalb der ersten 7 und der zweiten 8 Innenelektrode, angeordnet.

Die Anordnung der Außenelektroden gemäß dem Ausführungsbeispiel des elektrischen Vielschichtbauelements nach den Figuren 6a und 6b ist vorzugsweise gemäß der Ausführungsform in Figur 5c ausgeführt, wobei die erste und die zweite Innenelektrode des elektrischen Vielschichtbauelements mit den stirnseitig angeordneten Außenelektroden 6 verbunden sind. Die dritten 9 und vierten 10 Innenelektroden des elektrischen Vielschichtbauelements sind mit den Außenelektroden 6' verbunden, die an den Seitenflächen des Grundkörpers 1 angeordnet sind. Gemäß den Ausführungsformen nach Figur 6a, 6b sind somit alle Außenelektroden 6, 6' des elektrischen Vielschichtbauelements nach Figur 5c mit Innenelektroden verbunden.

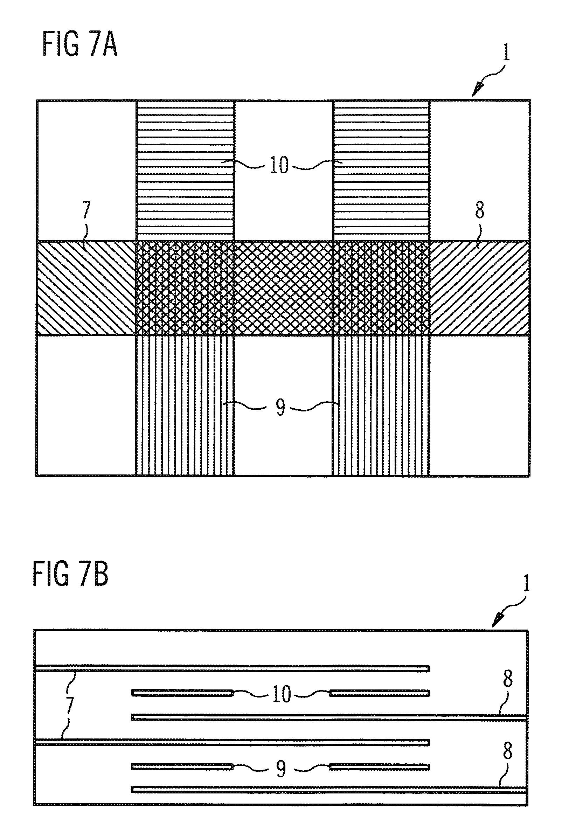

Figur 7a zeigt eine weitere Ausführungsform eines elektrischen Vielschichtbauelements, wobei das elektrische Vielschichtbauelement einen Grundkörper 1 aufweist, in dem erste und zweite Innenelektroden 7, 8 angeordnet sind, die einander überlappen. Die Ausführungsform des elektrischen Vielschichtbauelements nach Figur 7a zeigt zwei dritte Innenelektroden 9, die mit den ersten 7 und zweiten 8 Innenelektroden überlappen und elektrische Funktionseinheiten begrenzen. Das elektrische Vielschichtbauelement weist zwei vierte Innenelektroden 10 auf, die ebenfalls mit den ersten 7 und zweiten 8 Innenelektroden überlappen und weitere elektrische Funktionseinheiten begrenzen.

Figur 7b zeigt einen Querschnitt durch ein elektrisches Vielschichtbauelement gemäß der Ausführungsform nach Figur 7a, wobei das elektrische Vielschichtbauelement mehrere erste 7 und mehrere zweite 8 Innenelektroden aufweist. Mittig des elektrischen Vielschichtbauelements ist eine erste 7 und eine zweite 8 Innenelektrode angeordnet, die einander überlappen und eine erste elektrische Funktionseinheit begrenzen. Zwischen einer ersten 7 und einer zweiten 8 Innenelektrode des elektrischen Vielschichtbauelements sind dritte Innenelektroden 9 angeordnet, die zusammen mit den ersten 7 und zweiten 8 Innenelektroden im Verbund mit einer Keramik elektrische Funktionseinheiten bilden. Des Weiteren weist das elektrische Vielschichtbauelement vierte Innenelektroden 10 auf, die zusammen mit der ersten 7 und zweiten 8 Innenelektrode weitere elektrische Funktionseinheiten begrenzen. Die dritten 9 und die vierten 10 Innenelektroden sind jeweils in unterschiedlichen Elektrodenschichten, zwischen einer ersten 7 und einer zweiten 8 Innenelektroden, angeordnet.

Die Anordnung der Außenelektroden gemäß dem Ausführungsbeispiel des elektrischen Vielschichtbauelements nach den Figuren 7a und 7b kann beispielsweise gemäß der Ausführungsform der Anordnung der Außenelektroden 6, 6' nach Figur 5c ausgeführt sein.

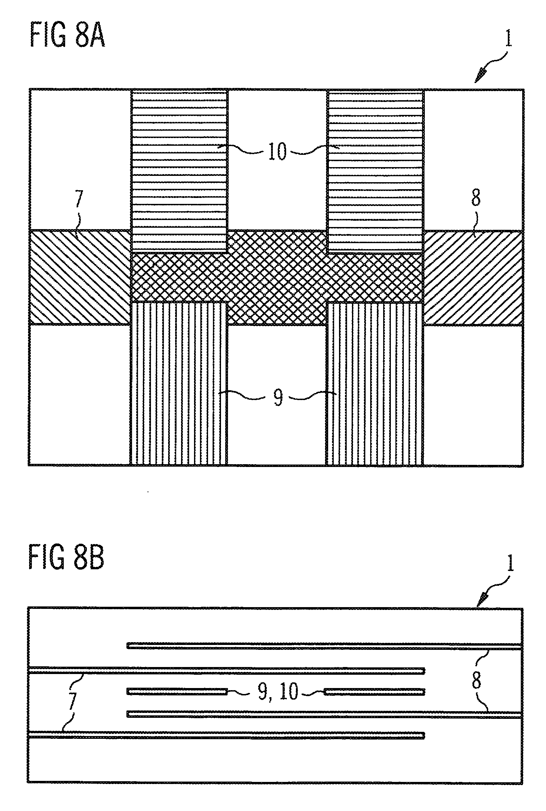

In Figur 8a ist eine weitere Ausführungsform eines elektrischen Vielschichtbauelements dargestellt. Das elektrische Vielschichtbauelement weist einen Grundkörper 1 mit ersten 7 und zweiten 8 Innenelektrode auf, die einander überlappen. Das elektrische Vielschichtbauelement weist des Weiteren zwei dritte Innenelektroden 9 und zwei vierte Innenelektroden 10 auf, die mit den ersten 7 und den zweiten 8 Innenelektroden überlappen und im Überlappungsbereich der Innenelektroden 7, 8, 9, 10 elektrische Funktionseinheiten begrenzen. Die dritten 9 und vierten 10 Innenelektroden sind jeweils in der gleichen Elektrodenschicht des Vielschichtbauelements angeordnet. Die dritten 9 und vierten 10 Innenelektroden sind vorzugsweise derart angeordnet, dass sie im Überlappungsbereich mit den ersten 7 beziehungsweise zweiten 8 Innenelektroden elektrische Funktionseinheiten begrenzen, jedoch zwischen den dritten 9 und vierten 10 Innenelektroden beziehungsweise zwischen zwei dritten 9 beziehungsweise zwei vierten 10 Innenelektroden keine elektrischen Funktionseinheiten gebildet sind.

Figur 8b zeigt einen Querschnitt durch ein elektrisches Vielschichtbauelement mit einer Innenelektrodenanordnung gemäß der Ausführungsform nach Figur 8a. Das elektrische Vielschichtbauelement weist zwei Paar von ersten 7 und zweiten 8 Innenelektroden auf, wobei zwischen den Paaren von ersten 7 und zweiten 8 Innenelektroden zwei dritte 9 und zwei vierte 10 Innenelektroden angeordnet sind. Die dritten 9 und vierten 10 Innenelektroden sind jeweils in der gleichen Elektrodenschicht des Vielschichtbauelements angeordnet. Die Außenelektroden des elektrischen Vielschichtbauelements gemäß der Ausführungsform nach den Figuren 8a und 8b kann beispielsweise wie in Figur 5c ausgeführt sein, wobei die ersten 7 und zweiten 8 Innenelektroden mit den stirnseitig angeordneten Außenelektroden 6 verbunden sind und die dritten 9 und vierten 10 Innenelektroden des elektrischen Vielschichtbauelements mit den seitenflächig angeordneten Außenelektroden 6' verbunden sind.

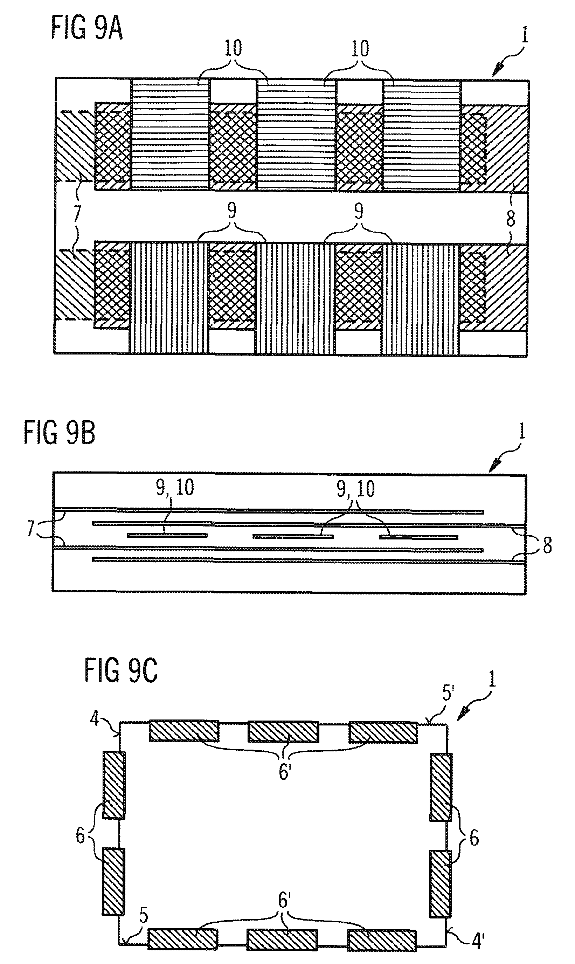

In Figur 9a ist eine weitere Ausführungsform eines elektrischen Vielschichtbauelements dargestellt. Das elektrische Vielschichtbauelement nach der Ausführungsform in der Figur 9a weist einen symmetrischen Aufbau auf, wobei jeder der symmetrischen Untereinheiten eine erste 7 und eine zweite 8 Innenelektrode sowie mehrere dritte 9 beziehungsweise vierte 9 Innenelektroden aufweist. Die ersten 7 und zweiten 8 Innenelektroden überlappen jeweils einander und bilden im Verbund mit einer Keramikschicht jeweils eine erste elektrische Funktionseinheit. Die beiden ersten Innenelektroden 7 sowie die beiden zweiten Innenelektroden 8 sind in dem elektrischen Vielschichtbauelement voneinander isoliert und weisen jeweils zwei separate Außenelektroden 6 auf. Die dritten 9 beziehungsweise vierten 10 Innenelektroden überlappen jeweils mit der ersten 7 und der zweiten 8 Innenelektrode und begrenzen weitere elektrische Funktionseinheiten.

In Figur 9b ist ein Querschnitt durch ein elektrisches Vielschichtbauelement gemäß der Ausführungsform nach 9a dargestellt. Das elektrische Vielschichtbauelement weist jeweils zwei Paar von ersten 7 und zwei 8 Innenelektroden auf, zwischen denen dritte 9 beziehungsweise vierte 10 Innenelektroden angeordnet sind. Die dritten 9 und vierten 10 Innenelektroden sind in der dargestellten Ausführungsform des elektrischen Vielschichtbauelements in der gleichen Elektrodenschicht angeordnet. In einer weiteren, nicht dargestellten Ausführungsform können die dritten 9 und vierten 10 Innenelektroden jedoch auch in mehreren Elektrodenschichten angeordnet sein.

Figur 9c zeigt die Anordnung der Außenkontakte 6, 6' gemäß dem Ausführungsbeispiel des elektrischen Vielschichtbauelements nach den Figuren 9a und 9b. Hierbei weist der Grundkörper 1 des elektrischen Vielschichtbauelements jeweils zwei an den Stirnseiten 4, 4' angeordnete Außenelektroden 6 auf. Die stirnseitig 4, 4' angeordneten Außenelektroden 6 sind jeweils mit der ersten 7 beziehungsweise zweiten 8 Innenelektrode des elektrischen Vielschichtbauelements verbunden. Die an den Seitenflächen 5, 5' des Grundkörpers 1 angeordneten Außenelektroden 6' sind jeweils mit den dritten 9 beziehungsweise vierten 10 Innenelektroden verbunden.

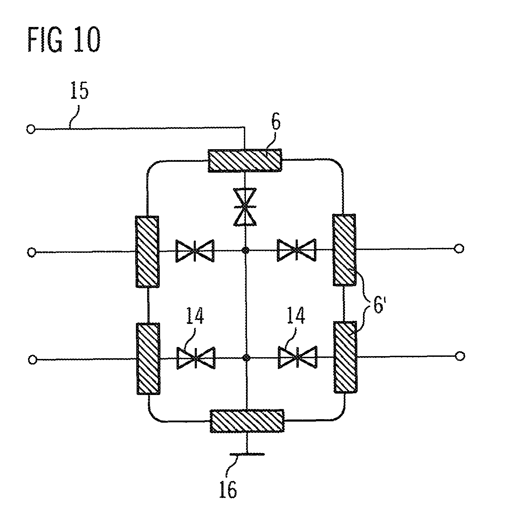

Figur 10 zeigt eine schematische Schaltungsanordnung eines elektrischen Vielschichtbauelements, wobei das elektrische Vielschichtbauelement in der dargestellten Ausführungsform fünf elektrische Funktionseinheiten aufweist. Die elektrischen Funktionseinheiten sind in der dargestellten Ausführungsform als Varistoren 14 ausgeführt. Es ist jedoch auch möglich, dass die elektrischen Funktionseinheiten als Kondensatoren ausgeführt sind. Des Weiteren kann das elektrische Vielschichtbauelement sowohl Kondensatoren als auch Varistoren aufweisen. In der dargestellten Ausführungsform weist das elektrische Vielschichtbauelement sechs Außenelektroden 6, 6' auf, wobei zwei Außenelektroden 6 an den Stirnseiten des Vielschichtbauelements und jeweils zwei Außenelektroden 6' an den Seitenflächen des Vielschichtbauelements angeordnet sind. Die stirnseitig angeordneten Außenelektroden 6 des elektrischen Vielschichtbauelements sind mit Masse 16 beziehungsweise mit einer spannungsführenden Leitung 15 verbunden. Die an den Seitenflächen des Vielschichtbauelements angeordneten Außenelektroden 6' sind vorzugsweise mit signalführenden Leitungen verbunden. Die Reihenfolge der Kontaktierung der Außenelektroden 6' an den Seitenflächen kann beliebig gewählt werden, wobei die stirnseitig angeordneten Außenelektroden 6 vorzugsweise mit einer Masse 16 beziehungsweise einer spannungsführenden Leitung verbunden sind.

Obwohl in den Ausführungsbeispielen nur eine beschränkte Anzahl möglicher Weiterbildungen der Erfindung beschrieben werden konnte, ist die Erfindung nicht auf diese beschränkt.

Es ist prinzipiell möglich, dass das elektrische Vielschichtbauelement eine Vielzahl von elektrischen Funktionseinheiten aufweist, die als Varistor beziehungsweise als Kondensator ausgeführt sind, wobei die Anordnung der Funktionseinheiten, der Innenelektroden und der Außenelektroden vorzugsweise symmetrisch ausgeführt ist. Der Anzahl der elektrischen Funktionseinheiten wird nur durch die Größe des Vielschichtbauelements eine Grenze gesetzt.

Die Beschreibung der hier angegebenen Gegenstände ist nicht auf die einzelnen speziellen Ausführungsformen beschränkt; vielmehr können die Merkmale der einzelnen Ausführungsformen, soweit technisch sinnvoll, beliebig miteinander kombiniert werden.

### Bezugszeichenliste

- 1: Grundkörper
- 2: Keramikschicht
- 3: Elektrodenschicht
- 4, 4': Stirnfläche
- 5, 5': Seitenfläche
- 6, 6': Außenelektrode
- 7: erste Innenelektrode
- 8: zweite Innenelektrode
- 9: dritte Innenelektrode
- 10: vierte Innenelektrode
- 11: erste Funktionseinheit
- 12: zweite Funktionseinheit
- 13: dritte Funktionseinheit
- 14: Varistor
- 15: spannungsführende Leitung
- 16: Masse

## Patentansprüche

1. Elektrisches Vielschichtbauelement,
- mit einem monolithischen Grundkörper (1), umfassend mehrere alternierend übereinander angeordnete Keramikschichten (2) und Elektrodenschichten (3),
- bei dem der Grundkörper (1) zwei einander gegenüberliegende Stirnflächen (4, 4') und zwei gegenüberliegende Seitenflächen (5, 5') aufweist,
- mit einer Mehrzahl Außenelektroden (6, 6') und einer Mehrzahl von Innenelektroden (7, 8, 9, 10), die in den Elektrodenschichten (3) ausgebildet sind,
- wobei die Innenelektroden (7, 8, 9, 10) wenigstens teilweise überlappen und Überlappungsbereiche bilden, wobei
jede Innenelektrode (7, 8, 9, 10) mit jeweils einer Außenelektrode (6, 6') verbunden ist, dass sich wenigstens eine von einer Stirnfläche (4, 4') ausgehende erste Innenelektrode (7), die mit nur einer Außenelektrode (6) an der Stirnfläche (4, 4') verbunden ist, mit wenigstens einer von einer gegenüberliegenden Stirnfläche (4, 4') ausgehenden zweiten Innenelektrode (8), die mit nur einer Außenelektrode (6) an der gegenüberliegenden Stirnfläche (4, 4') verbunden ist, überlappt und dass von einer Seitenfläche (5, 5') wenigstens eine dritte Innenelektrode (9) ausgeht, die mit nur einer Außenelektrode (6') an der Seitenfläche (5, 5') verbunden ist und die mit der ersten (7) und zweiten (8) Innenelektrode überlappt, dadurch gekennzheichnet dass von der oder einer gegenüberliegenden Seitenfläche (5, 5') wenigstens eine vierte Innenelektrode (9) ausgeht, die mit nur einer Außenelektrode (6') an der Seitenfläche (5, 5') oder an der gegenüberliegenden Seitenfläche (5, 5') verbunden ist und die mit der ersten (7) und zweiten (8) Innenelektrode überlappt, wobei die dritte (9) und vierte (10) Innenelektrode in der gleichen Elektrodenschicht (3) angeordnet sind.

2. Elektrisches Vielschichtbauelement nach Anspruch 1, wobei die erste (7) und die zweite (8) Innenelektrode im Überlappungsbereich mit einer dazwischen liegenden Keramikschicht (2) eine erste elektrische Funktionseinheit (11) bilden, wobei die Funktionseinheit (11) die Funktion eines Kondensators oder eines Varistors (14) aufweist.

3. Elektrisches Vielschichtbauelement nach Anspruch 2, wobei eine dritte Innenelektrode (9) im Überlappungsbereich mit einer der ersten (7) und der zweiten (8) Innenelektrode zusammen mit einer Keramikschicht (2) eine zweite elektrische Funktionseinheit (12) bildet.

4. Elektrisches Vielschichtbauelement nach Anspruch 3, wobei eine vierte Innenelektrode (10), mit einer der ersten (7) und der zweiten (8) Innenelektrode eine dritte elektrische Funktionseinheit (13) bildet.

5. Elektrisches Vielschichtbauelement nach einem der Ansprüche 1 bis 4,
wobei die dritte (9) und vierte (10) Innenelektrode jeweils mit einer Außenelektrode (6') verbunden sind, die auf gegenüberliegenden Seitenflächen (5, 5') des Grundkörpers (1) angeordnet sind.

6. Elektrisches Vielschichtbauelement nach einem der vorhergehenden Ansprüche,
das bei n Außenelektroden, mit n als ganze Zahl größer als 2, genau n-1 elektrische Funktionseinheiten aufweist.

7. Elektrisches Vielschichtbauelement nach einem der Ansprüche 3 bis 5,
das bei n Außenelektroden, mit n als ganze Zahl größer als 2, genau n-2 elektrische Funktionseinheiten aufweist.

8. Elektrisches Vielschichtbauelement nach einem der Ansprüche 2 bis 7,
das mehrere Kondensatoren mit unterschiedlichen Kapazitäten aufweist.

9. Elektrisches Vielschichtbauelement nach einem der Ansprüche 2 bis 7,
das mehrere Varistoren (14) mit unterschiedlichen Varistorspannungen aufweist.

10. Elektrisches Vielschichtbauelement nach einem der vorhergehenden Ansprüche,
wobei die Keramikschicht (2) eine Varistor- und/oder Kondensatorkeramik umfasst.

11. Elektrisches Vielschichtbauelement nach Anspruch 10, wobei die Varistorkeramik ZnO-BiSb oder ZnO-Pr aufweist.

12. Schaltungsanordnung mit einem elektrischen Vielschichtbauelement nach einem der vorhergehenden Ansprüche,
wobei wenigstens eine stirnseitig angeordnete Außenelektrode (6') mit Masse verbunden ist.

13. Schaltungsanordnung nach Anspruch 12,
wobei wenigstens eine stirnseitig angeordnete Außenelektrode (6') mit einer spannungsführenden Leitung verbunden ist.

## Claims

1. Electrical multi-layered component,
- comprising a monolithic base body (1), comprising a plurality of ceramic layers (2) and electrode layers (3) arranged alternately one above another,
- wherein the base body (1) has two end surfaces (4, 4') lying opposite one another and two side surfaces (5, 5') lying opposite one another,
- comprising a plurality of external electrodes (6, 6') and a plurality of internal electrodes (7, 8, 9, 10) embodied in the electrode layers (3),
- wherein the internal electrodes (7, 8, 9, 10) at least partly overlap and form overlap regions,
wherein
each internal electrode (7, 8, 9, 10) is connected to a respective external electrode (6, 6'), in that at least one first internal electrode (7) which proceeds from an end surface (4, 4') and which is connected to only one external electrode (6) at the end surface (4, 4') overlaps at least one second internal electrode (8) which proceeds from an opposite end surface (4, 4') and which is connected to only one external electrode (6) at the opposite end surface (4, 4'), and in that at least one third internal electrode (9) proceeds from a side surface (5, 5') and is connected to only one external electrode (6') at the side surface (5, 5'), said at least one third internal electrode overlapping the first (7) and second (8) internal electrode,
**characterized in that** at least one fourth internal electrode (9) proceeds from the or an opposite side surface (5,5') and is connected to only one external electrode (6') at the side surface (5,5') or at the opposite side surface (5,5') and overlaps the first (7) and second (8) internal electrode, wherein the third (9) and fourth (10) internal electrodes are arranged in the same electrode layer (3).

2. Electrical multi-layered component according to Claim 1,
wherein the first (7) and the second (8) internal electrode form, in the overlap region with a ceramic layer (2) lying in between, a first electrical functional unit (11), wherein the electrical functional unit (11) has the function of a capacitor or a varistor (14).

3. Electrical multi-layered component according to Claim 2,
wherein a third internal electrode (9) in the overlap region with one of the first (7) and second (8) internal electrodes together with a ceramic layer (2) forms a second electrical functional unit (12).

4. Electrical multi-layered component according to Claim 3,
wherein a fourth internal electrode (10) forms with one of the first (7) and second (8) internal electrodes a third electrical functional unit (13).

5. Electrical multi-layered component according to any of Claims 1 to 4,
wherein the third (9) and fourth (10) internal electrodes are respectively connected to an external electrode (6'), which are arranged on opposite side surfaces (5, 5') of the base body (1).

6. Electrical multi-layered component according to any of the preceding claims,
which comprises, in the case of n external electrodes, where n is an integer greater than 2, precisely n-1 electrical functional units.

7. Electrical multi-layered component according to any of Claims 3 to 5,
which comprises, in the case of n external electrodes, where n is an integer greater than 2, precisely n-2 electrical functional units.

8. Electrical multi-layered component according to any of Claims 2 to 7,
which comprises a plurality of capacitors having different capacitances.

9. Electrical multi-layered component according to any of Claims 2 to 7,
which comprises a plurality of varistors (14) having different varistor voltages.

10. Electrical multi-layered component according to any of the preceding claims,
wherein the ceramic layer (2) comprises a varistor ceramic and/or capacitor ceramic.

11. Electrical multi-layered component according to Claim 10,
wherein the varistor ceramic comprises ZnO-BiSb or ZnO-Pr.

12. Circuit arrangement comprising an electrical multi-layered component according to any of the preceding claims,
wherein at least one external electrode (6') arranged on an end side is connected to ground.

13. Circuit arrangement according to Claim 12,
wherein at least one external electrode (6') arranged on an end side is connected to a voltage-carrying line.

## Revendications

1. Composant électrique multicouche présentant
un corps monolithique de base (1) comportant plusieurs couches céramiques (2) et couches d'électrode (3) disposées les unes au-dessus des autres en alternance,
le corps de base (1) présentant deux surfaces frontales (4, 4') mutuellement opposées et deux surfaces latérales (5, 5') mutuellement opposées,
plusieurs électrodes extérieures (6, 6') et plusieurs électrodes intérieures (7, 8, 9, 10) formées dans les couches d'électrode (3),
les électrodes intérieures (7, 8, 9, 10) se superposant au moins en partie et formant des parties en superposition,
chaque électrode intérieure (7, 8, 9, 10) étant reliée à une électrode extérieure (6, 6') respective de telle sorte qu'au moins une première et électrode intérieure (7) partant d'au moins une surface frontale (4, 4') et n'étant reliée qu'à une électrode extérieure (6) sur la surface frontale (4, 4') se superpose à au moins une deuxième électrode intérieure (8) partant d'une surface frontale (4, 4') opposée et n'étant reliée qu'à une électrode extérieure (6) sur la surface frontale (4, 4') opposée et qu'une troisième électrode intérieure (9) qui n'est reliée qu'à une électrode extérieure (6') sur la surface latérale (5, 5') et qui se superpose à la première électrode intérieure (7) et à la deuxième électrode (8) part d'une surface latérale (5, 5),
**caractérisé en ce que**
au moins une quatrième électrode intérieure (9) qui n'est reliée qu'à une électrode extérieure (6') sur la surface latérale (5, 5') ou sur la surface latérale (5, 5') opposée et qui se superpose à la première électrode intérieure (7) et à la deuxième électrode intérieure (8) part de la surface latérale ou de la surface latérale opposée (5, 5') et
**en ce que** la troisième électrode intérieure (9) et la quatrième électrode intérieure (10) sont disposées dans la même couche d'électrode (3).

2. Composant électrique multicouche selon la revendication 1, dans lequel la première électrode intérieure (7) et la deuxième électrode intérieure (8) forment dans la zone de superposition une première unité électrique fonctionnelle (11) avec une couche céramique (11) intercalée, l'unité fonctionnelle (11) présentant la fonction d'un condensateur ou d'un varistor (14).

3. Composant électrique multicouche selon la revendication 2, dans lequel une troisième électrode intérieure (9) forme dans la zone de superposition une deuxième unité électrique fonctionnelle (12) avec la première électrode intérieure (7) ou la deuxième électrode intérieure (8) et une couche céramique (2).

4. Composant électrique multicouche selon la revendication 3, dans lequel une quatrième électrode intérieure (10) forme une troisième unité électrique fonctionnelle (13) avec la première électrode intérieure (7) ou la deuxième électrode intérieure (8).

5. Composant électrique multicouche selon la revendication selon l'une des revendications 1 à 4, dans lequel la troisième électrode intérieure (9) et la quatrième électrode intérieure (10) sont toutes deux reliées à une électrode extérieure (6') disposée sur des surfaces latérales opposées (5, 5') du corps de base (1).

6. Composant électrique multicouche selon l'une des revendications précédentes, qui pour n électrodes extérieures, n étant un nombre entier supérieur à 2, présente exactement n-1 unités électriques fonctionnelles.

7. Composant électrique multicouche selon l'une des revendications 3 à 5, qui pour n électrodes extérieures, n étant un nombre entier supérieur à 2, présente exactement n-2 unités électriques fonctionnelles.

8. Composant électrique multicouche selon l'une des revendications 2 à 7, qui présente plusieurs condensateurs qui présentent différentes capacités.

9. Composant électrique multicouche selon l'une des revendications 2 à 7, qui présente plusieurs varistors (14) qui présentent différentes tensions de varistor.

10. Composant électrique multicouche selon l'une des revendications précédentes, dans lequel la couche céramique (2) comporte une céramique de varistor et/ou une céramique de condensateur.

11. Composant électrique multicouche selon la revendication 10, dans lequel la céramique de varistor présente du ZnO-BiSb ou du ZnO-Pr.

12. Circuit doté d'un composant multicouche selon l'une des revendications précédentes, au moins une électrode extérieure (6') disposée du côté frontal étant raccordée à la masse.

13. Circuit selon la revendication 12, dans lequel au moins une électrode extérieure (6') disposée frontalement est raccordée à un conducteur conduisant une tension.
